# EUROPÄISCHE PATENTSCHRIFT

(11) **EP 1 976 958 B1**
(45) Veröffentlichungstag und Bekanntmachung des Hinweises auf die Patenterteilung: **24.02.2010**
(21) Anmeldenummer: 06806669.5
(22) Anmeldetag: 02.11.2006
(51) Int. Cl.: C09K 21/14, C08L 23/06, C08L 23/16, C08L 71/12, E04B 1/94

(54) **BRANDSCHUTZBAUTEILE**
FIRE PROTECTION COMPONENTS
ELEMENT IGNIFUGE

(30) Priorität: 01.12.2005 AT 19382005
(43) Veröffentlichungstag der Anmeldung: 08.10.2008
(73) Patentinhaber: Intumex GmbH, 4021 Linz (AT)
(72) Erfinder: HORACEK, Heinrich, A-4040 Linz (AT)
(74) Vertreter: Landgraf, Elvira
(86) Internationale Anmeldenummer: PCT/EP2006/010533
(87) Internationale Veröffentlichungsnummer: WO 2007/062725

(56) Entgegenhaltungen:
- EP-A1- 0 400 402
- EP-A2- 0 832 735
- DE-C1- 19 705 736

## Beschreibung

Die vorliegende Erfindung betrifft Brandschutzbauteile bestehend aus einem Hochtemperaturkunststoff und einem intumeszierenden Thermoplasten.

Stand der Technik ist es bisher, intumeszierende Einlegeteile in Metallgehäuse einzulegen, um im Brandfall den Innenraum des Gehäuses auszuschäumen und eine Verbreitung des Brandes zu verhindern. Beispiele für solche Metallgehäuse sind Rohrmanschetten, Verteilerdosen, Lampengehäuse, Kabeltrassen, Lüftungskanäle und dergleichen.
Die Herstellung solcher Brandschutzteile ist jedoch sehr aufwendig, da die Metallgehäuse und die intumeszierenden Einleger getrennt hergestellt und anschließend in einem extra Schritt zusammen gebaut werden müssen. Ein weiterer Nachteil ist, dass in der Regel keine ausreichende kraftbündige Verbindung zwischen Metallgehäuse und Einleger besteht.

Aufgabe der vorliegenden Erfindung war es daher, eine Möglichkeit zu finden, solche Bauteile in wirtschaftlicher Weise und mit kraftbündiger Verbindung herzustellen.

Unerwarteter Weise konnte diese Aufgabe durch Brandschutzbauteile gelöst werden, die im Mehrkomponentenspritzguss aus einem Hochtemperaturkunststoff und einem intumeszierenden Thermoplasten hergestellt werden.

Gegenstand der vorliegenden Erfindung sind demnach Brandschutzbauteile, die dadurch gekennzeichnet sind, dass sie aus einer Schale aus einem gegebenenfalls glasfaserverstärkten Hochtemperaturkunststoff und einem kraftbündig verbundenem Einleger aus einem intumeszierenden Thermoplasten bestehen.

Die erfindungsgemäßen Brandschutzbauteile bestehen somit aus einer Schale und einem damit kraftbündig verbundenen Einleger.

Die Schale besteht dabei aus einem gegebenenfalls glasfaserverstärkten Hochtemperaturkunststoff.
Als Hochtemperaturkunststoff mit Gebrauchstemperaturen über 200°C eignen sich Duromere, wie etwa Melaminformaldehydharze (MF), Phenolformaldehydharze (PF), Polyimidharze (PI), Polybenzbisthiazole (PBT), Bismaleinimide (BMI), Polybenzimidazole (PBI), Polybenzbisoxazole (PBO), Bis-epoxy anthracene (BEA), oder Hochtemperaturthermoplaste, wie etwa Polyethersulfon (PES), Polyetherimid (PEI), Polyetheretherketon (PEEK), Polyphenylensulfide (PPS ), Polyphenylenoxid (PPO), Liquid crystal polymers (LCP), Polyarylsulfone (PAS), Polyamide (PA), thermoplastische Polyimide (TPI),

Bevorzugt werden Hochtemperaturkunststoffe eingesetzt, deren Schmelz- oder Zersetzungstemperatur höher als 250°C liegen.

Der Anteil an Glasfasern im Hochtemperaturkunststoff kann dabei bei 0 - 50 Gew.%, bevorzugt bei 20 - 40 Gew.% liegen.

Der Einleger besteht aus einer intumeszierenden, thermoplastischen Mischung mit Verarbeitungstemperaturen unterhalb von 250°C.
Als Thermoplasten eignen sich dabei TPU (thermoplastische Urethane), PEBAX (Polyetherblockamide), EPDM (Ethylen-Propylen-Diencopolymerisate), LDPE (Polyethylene), PP (Polypropylene), EVA (Ethylen-Vinylacetat-copolymere ), PAc (Polyacrylate), Ethylencopolymere,
Die Thermoplasten sind mit Intumeszenzadditiven mit Expansionstemperaturen von 200 bis 300°C versetzt. Diese können beispielsweise Vermikular-Graphite mit Expansionstemperaturen von 200- 300°C und/oder eine Kombination aus Säurespender, Kohlenstoffbildner und Treibmittel und gegebenenfalls einem anorganischen Pigment sein.
Unter Wärmeeinwirkung zersetzt sich bei 250°C der Säurespender unter Säurebildung. Die Säure reagiert mit dem Kohlenstoffbildner, beispielsweise einem Polyalkohol, zu einem Polyester. Als Säurespender dienen Ammoniumpolyphosphate, Melaminphosphate, Magnesiumsulfate, Borate und Aminsulfonate.
Kohlenstoffbildner sind polyhydroxygruppenhaltige Alkohole, wie Pentaerythrit, Dipentaerythrit, Tripentaerythrit und Stärke. Als Treibmittel werden Melamin, Melaminphosphat, Dicyandiamid und Trishydrazinotriazine eingesetzt.
Der Anteil an Säurespender liegt bei 5 bis 40 Gew.%, bevorzugt bei 10 bis 35 Gew.%. Der Kohlenstoffbildner wird in einer Menge von 2 bis 20 Gew.%, bevorzugt von 4 bis 15 Gew.%, zugesetzt. Die Menge an Treibmittel liegt ebenfalls bei 2 bis 20 Gew.% , bevorzugt von 4 bis 15 Gew.%.

Vermikular-Graphite (V- Graphite) mit Expansionstemperaturen von 200- 300°C sind solche, die durch Behandlung mit Oxidationsmitteln, wie Schwefelsäure, Salpetersäure, Phosphorsäure, Wasserstoffsuperoxid, Kaliumpermanganat, Eisenchloriden und Chromsäuren erhalten werden.

Die erfindungsgemäße Zusammensetzung enthält gegebenenfalls noch anorganische Pigmente, wie etwa Titandioxid, Siliziumdioxid, Aluminiumtrioxid, Zirkondioxid und Zinkdioxid.
Die Menge an Pigment liegt bei 0 bis 20 Gew. %, bevorzugt bei 4 bis 12 Gew.%.

Besonders bevorzugt sind Mischungen aus Ammoniumpolyphosphat, Melamin, Pentaerythrit und Titandioxid.

Weiters kann dem Thermoplasten gegebenenfalls noch ein Flammhemmer, wie etwa roter Phosphor oder eine Stickstoffverbindung, beispielsweise Melaminphosphat, Guanidinphosphat, Ammoniumhydrogenphosphat, Ammoniumpolyphosphat, Trihydrazinophosphat, Ethylendiamin, u.s.w. in einer Menge von 0 - 40Gew% zugesetzt werden.

Die Gesamtmenge an Füllstoffen sollte sich dabei im Rahmen von insgesamt 20 bis 80 Gew.% bewegen.

Die Kombination von Hochtemperaturkunststoffen, Thermoplasten für den Einleger und Intumeszenzadditiven wird bevorzugt so gewählt, dass die maximale Expansion der Intumeszenzadditive tiefer liegt als die Schmelz- oder Zersetzungstemperatur der Hochtemperaturpolymere aber höher als die Verarbeitungstemperatur der Thermoplaste.

Gegebenenfalls kann entweder dem Hochtemperaturkunststoff für die Schale oder dem Thermoplasten für den Einleger ein Haftvermittler zugesetzt werden.
Geeignete Haftvermittler sind beispielsweise Blockcopolymere oder Pfropfpolymere, bei denen ein Block mit dem Hochtemperaturpolymeren und der andere mit dem intumeszierenden Thermoplasten verträglich ist, wie etwa Polyetherpolyurethankautschuk, Polyketonpolyurethanblockcopolymere, Polystyrol-Polybutadienblockpolymere (Kraton®, Cariftex®, Santopren®), Maleinsäure gepfropfte Polyolefine (XTA-1), Acrylsäure gepfropfte Polyolefine (Fusabond).
Der Haftvermittler wird in einer Menge von 0 - 5Gew.% zugesetzt. Bevorzugt wird der Haftvermittler den intumeszierenden Thermoplasten zugegeben.

Die erfindungsgemäßen Brandschutzteile können aber auch als 3-Komponenten-Brandschutzteile ausgebildet sein, indem die Schale gegebenenfalls noch innen und/oder außen mit einer Intumeszenzschicht umgeben ist. So kann beispielsweise die äußere Intumeszenzschicht aus EVA mit Intumeszenzadditiven (z.B.:10% Melamin, 20% Ammoniumpolyphosphat, 10% Pentaerythrit und 10% Titandioxid), bestehen, die Schale aus Polyetherimid und die innere Intumeszenzschicht aus Polypropylen mit 50% V- Graphit. Die Dicken der einzelnen Schichten sind den Anforderungen anzupassen und können zwischen 0,2 bis 5 mm betragen.

Die Herstellung der erfindungsgemäßen Brandschutzbauteile erfolgt im Mehrkomponentenspritzguss. Die Mehrkomponentenspritzgießtechnik wird beispielsweise in "Mehrkomponentenspritztechnik 2000 - Anwendung und Perspektiven, Ingenieur Werkstoffe, Springer VDI Verlag 2000, beschrieben.

Bevorzugte Herstellverfahren sind dabei die Hinterspritztechnik (HST) von vorgeformten Schalen und das Verbundspritzgießen (V-SG).
Bei der HST wird die Hochtemperaturschale in die entsprechende Form eingelegt und der intumeszierende Einleger beigespritzt. Beim 2-Komponenten-Verbundspritzgießen kann mit drehenden oder nicht drehenden Werkzeugen gearbeitet werden.

Die Abmessungen der Schale und des Einlegers richten sich dabei nach dem jeweiligen Einsatzzweck.

Die erfindungsgemäßen Brandschutzbauteile zeichnen sich dadurch aus, dass sie im Vergleich zum Stand der Technik wirtschaftlicher hergestellt werden können und eine bessere kraftbündige Verbindung zwischen Schale und Einleger aufweisen.

Die erfindungsgemäßen Brandschutzbauteile eignen sich deshalb zur Verwendung als Lampengehäuse, Kabeltrassen, Verteilerdosen, Rohrmanschetten, Lüftungskanäle und dergleichen.

### Beispiele 1-12:

Es wurden Verteilerdosen mit den Abmessungen 100x100x55 mm als 2K-Verbund mit einer 1,0 mm dicken Schale aus einem Hochtemperaturpolymeren und einem 1 mm dicken intumeszierenden Thermoplasten im Mehrkomponentenspritzguss hergestellt.
Die Zusammensetzungen sind aus der nachfolgenden Tabelle 1 ersichtlich:

**Tabelle 1:**

| SCHALE mit 30 Gew% Glasfasern | | EINLEGER | | |
|---|---|---|---|---|
| Bsp. | HTK | TP | V-Graphit/X1 | HV |
| 1 | PF Bakelite PF0790K01 | TPU Elastollan C85A | 40%/- | 1(2%) |
| 2 | PEEK Victrex 450GL30 | TPU Elastollan C85A - | /40% | 2(2%) |
| 3 | PES Udel GF130 | PEBAX® - | 40% / - | |
| 4 | PPO C1001 | EPDM Nordel 2744 | 40%/- | 3(2%) |
| 5 | PEI Ultem 1000 | Pac Lotryl 30BA02 | 40%/- | |
| 6 | PEI Ultem 1000 | PP HD120MO | -/40% | |
| 7 | PA Zytel 51/G35 | PP HD120MO | 40/- | 4(2%) |
| 8 | PA Zytel HTN | LDPE FT7245 | 40/- | 4(2%) |
| 9 | PPS Ryton R4 | EVA Evatane 2403 | -/40% | |
| 10 | LCP Vectra A130 | EPDM Nordel 2744 | 40%/- | 3(2%) |
| 11 | PEI Ultem 1000 | PP HD 120MO | 40%/- | |
| 12 | BMI B21 | Ethylencop.Elvaloy | NH 40%/- | |

| | | | | |
|---|---|---|---|---|
| HTK..... Hochtemperaturkunststoff Bakelite PF 0790K01 Bakelite, Victrex 450GL30 ICI, Udel GF 130 Solvay, C1001 G.E., Ultem 1000 G.E., Zytel 51/G35 DuPont, Zytel HTN DuPont, Ryton R4 Chevron Phillips, Vectra 130 Hoechst Celanese, BMI B21 Chemie Linz TP....Thermoplast Ellastollan C85A Elastogran, Pebax Arkema, Nordel 2744 DuPont, Lotryl 30BA02 ATOFINA, HD 120MO Borealis, FT 7245 Borealis, Evatane 3203 ATOFINA, Elvaloy DuPont X1.....Ammoniumpolyphosphat/Melamin/Pentaerythrit/Titandioxid (1:1:1:1) HV.....Haftvermittler HV 1.....Polyetherpolyurethankautschuk HV 2.....Polyketonpolyurethanblockcopolymer HV 3.....Polystyrol-Polybutadienblockpolymer (Kraton D1102) HV 4.... Maleinsäure gepfropftes Polyolefin( XTA-1 Chemie Linz) | | | | |

Einige dieser Dosen wurden in einer Gipskartonwand einem Brandversuch nach der ÖNORM B 2800 Teil 2 "Brandverhalten von Baustoffen und Bauteilen: Begriffsbestimmungen, Anforderungen, Prüfungen" und nach Teil 4 "Brandverhalten von Baustoffen und Bauteilen: Einreihung in die Brandwiderstandsklassen" unterzogen.
Der Versuchsaufbau bestand aus zwei 14mm dicken Gipskartonplatten, die an einer Metallständerkonstruktion aus Stahl C-Profilen mit einer Stärke von 40mm angebracht wurden. Dazwischen befand sich eine Steinwollplatte Termarock 40 mit einer Stärke von 40mm und einem Raumgewicht von 40 kg/m3.
Die Gipskartonplatten hatten auf der Kalt- und Warmseite Öffnungen für die Verteilerdosen mit den Abmessungen 100x100x55 mm.
Das Ergebnis zeigte entscheidende Vorteile für die Kombination Hochtemperaturkunstoff/intumeszierende Thermoplast im Vergleich zum reinen intumeszierenden Thermoplasten gleicher Wandstärke hinsichtlich der raumabschließenden Kriterien und der Isolation.

| Nr: Außenschicht/1mm | | Innenschicht/1mm | Brandwiderstandszeit |
|---|---|---|---|
| V1 | P+V-Graphit | PP+V-Graphit | 60 Minuten |
| 11 | PEI 1mm | PP+V-Graphit | >90 Minuten |
| 6 | PP+X1 | PEI | >90 Minuten |
| 8 | PA | LDPE + V- Graphit | >90 |
| 3 | PES | PEBAX +V-Graphit | >90 |
| 4 | PPO | EPDM + V-Graphit | >90 |
| 10 | LCP | EPDM+ V-Graphit | >90 |
| 12 | BMI | EPDM + V-Graphit | >90 |

Nach etwa 100 Minuten musste der Versuch abgebrochen werden, da die Stabilität der Wand gefährdet war.

## Patentansprüche

1. Brandschutzbauteile, **dadurch gekennzeichnet, dass** sie aus einer Schale aus einem gegebenenfalls glasfaserverstärkten Duromer aus der Gruppe der Melaminformaldehydharze, Phenolformaldehydharze, Polyimidharze, Polybenzbisthiazole, Bismaleinimide, Polybenzimidazole, Polybenzisooxazole und Bis-epoxy-anthracene oder Hochtemperaturthermoplaste aus der Gruppe Polyethersulfon, Polyetherimid, Polyetheretherketon, Polyphenylensulfid, Polyphenylenoxid, flüssigkristalline Polymere, Polyarylsulfone, thermoplastische Polyimide und Polyamide eingesetzt werden, deren Gebrauchstemperatur oberhalb 200°C und Schmelz- oder Zersetzungstemperaturen oberhalb 250°C liegen,und einem kraftbündig verbundenen Einleger aus einem intumeszierenden Thermoplasten bestehen.

2. Brandschutzbauteile nach Anspruch 1, **dadurch gekennzeichnet, dass** als Thermoplast thermoplastische Polyurethane, Polyetherblockamide, Ethylen-Propylen-Diencopolymerisate, Polyethylen , Polypropylen, Ethylenvinylacetate, oder Polyacrylate oder Ethylencopolymere eingesetzt werden, deren Verarbeitungstemperaturen unterhalb 250°C liegen.

3. Brandschutzbauteile nach Anspruch 1 bis 2, **dadurch gekennzeichnet, dass** der Anteil an Glasfasern im Duromeren fbei 0 - 50Gew.% liegt.

4. Brandschutzbauteile nach Anspruch 1 bis 3, **dadurch gekennzeichnet, dass** der Thermoplast mit Intumeszenzadditiven versetzt ist, deren Intumeszenztemperaturen zwischen 200 und 300°C also oberhalb der Verarbeitungstemperatur der Thermoplaste für die Einleger aber unterhalb der Schmelz- oder Zersetzungstemperatur der Duromeren liegen, wobei als Intumeszenzadditive Vermikular-Graphite und/oder eine Kombination aus Säurespender, Kohlenstoffbildner und Treibmittel und gegebenenfalls einem anorganischen Pigment eingesetzt werden.

5. Brandschutzbauteile nach Anspruch 4, **dadurch gekennzeichnet, dass** als Säurespender Ammoniumpolyphosphate, Melaminphosphate, Magnesiumsulfat, Borate oder Aminsulfonate in einer Menge von 5 bis 40 Gew.%; als Kohlenstoffbildner polyhydroxygruppenhaltige Alkohole oder Stärke in einer Menge von 2 bis 20 Gew.%, als Treibmittel Melamin, Melaminphosphat, Dicyandiamid oder Trishydrazinotriazine in einer Menge von 2 bis 20 Gew.% und als Pigment Titandioxid, Siliziumdioxid, Aluminiumtrioxid, Zirkondioxid oder Zinkdioxid in einer Menge von 0 bis 20 Gew. % eingesetzt werden.

6. Brandschutzbauteile nach Anspruch 5, **dadurch gekennzeichnet, dass** eine Mischung von Ammoniumpolyphosphat, Melamin, Pentaerythrit und Titandioxid eingesetzt wird.

7. Brandschutzbauteile nach Anspruch 6, **dadurch gekennzeichnet, dass** dem Thermoplasten roter Phosphor oder eine Stickstoffverbindung als Flammhemmer in einer Menge von 0 - 40Gew% zugesetzt wird.

8. Brandschutzbauteile nach Anspruch 7, **dadurch gekennzeichnet, dass** als Stickstoffverbindung Melaminphosphat, Guanidinphosphat, Ammoniumhydrogen-phosphat, Ammoniumpolyphosphat, Trihydrazinophosphat, oder Ethylendiamin zugesetzt wird.

9. Brandschutzbauteile nach Anspruch 4 bis 8, **dadurch gekennzeichnet, dass** die Gesamtmenge an Intumeszenzadditiven 20 bis 80 Gew.% beträgt.

10. Brandschutzbauteile nach einem der Ansprüche 1 bis 19, **dadurch gekennzeichnet, dass** dem Duromeren für die Schale oder dem Thermoplasten für den Einleger gegebenenfalls ein Haftvermittler aus der Gruppe der Polyetherpolyurethankautschuke, Polyketonpolyurethanblockcopolymere, Maleinsäurepfropfolefine, Acrylsäurepfropfolefine oder Metacrylsäure-pfropfpolyolfine oder Polystyrol-Polybutadienblockpolymere in einer Menge von 0 bis 5 Gew.% zugesetzt werden.

11. Brandschutzbauteile nach einem der Ansprüche 1 bis 10, **dadurch gekennzeichnet, dass** die Schale gegebenenfalls noch innen und/oder außen mit einer Intumeszenzschicht umgeben ist.

12. Brandschutzbauteile nach einem der Ansprüche 1 bis 11, **dadurch gekennzeichnet, dass** sie im Mehrkomponentenspritzguss hergestellt werden.

## Claims

1. Fire-protection components, **characterized in that** they are composed of a shell composed of an optionally glass-fibre-reinforced thermoset from the group of the melamine-formaldehyde resins, phenol-formaldehyde resins, polyimide resins, polybenzobisthiazoles, bismaleimides, polybenzimidazoles, polybenzisoxazoles and bisepoxyanthracenes, or high-temperature thermoplastics from the group of polyether sulphone, polyetherimide, polyether ether ketone, polyphenylene sulphide, polyphenylene oxide, liquid-crystalline polymers, polyaryl sulphones, thermoplastic polyimides, and polyamides, where the service temperature of these is above 200°C and the melting points or decomposition temperatures of these are above 250°C, and of a fixed insert composed of an intumescent thermoplastic.

2. Fire-protection components according to Claim 1, **characterized in that** the thermoplastic used comprises thermoplastic polyurethanes, polyether block amides, ethylene-propylene-diene copolymers, polyethylene, polypropylene, ethylene-vinyl acetates, or polyacrylates or ethylene copolymers, where the processing temperatures of these are below 250°C.

3. Fire-protection components according to Claim 1 or 2, **characterized in that** the proportion of glass fibres in the thermoset is from 0 to 50% by weight.

4. Fire-protection components according to any of Claims 1 to 3, **characterized in that** intumescent additives have been admixed with the thermoplastic, and the intumescence temperatures of these are from 200 to 300°C, i.e. above the processing temperature of the thermoplastics for the inserts but below the melting point or decomposition temperature of the thermosets, where the intumescent additives used comprise vermicular graphites and/or a combination composed of acid donor, carbonizer, and blowing agent, and, if appropriate, of an inorganic pigment.

5. Fire-protection components according to Claim 4, **characterized in that** the acid donors used comprise an amount of from 5 to 40% by weight of ammonium polyphosphates, melamine phosphates, magnesium sulphates, borates or amine sulphonates; the carbonizers used comprise an amount of from 2 to 20% by weight of starch or polyhydric alcohols, the blowing agents used comprise an amount of from 2 to 20% by weight of melamine, melamine phosphate, dicyandiamide, or trishydrazinotriazines, and the pigment used comprises an amount of from 0 to 20% by weight of titanium dioxide, silicon dioxide, aluminium trioxide, zirconium dioxide, or zinc dioxide.

6. Fire-protection components according to Claim 5, **characterized in that** a mixture of ammonium polyphosphate, melamine, pentaerythritol and titanium dioxide is used.

7. Fire-protection components according to Claim 6,
**characterized in that** an amount of from 0 to 40% by weight of red phosphorus or a nitrogen compound is added as flame retardant to the thermoplastic.

8. Fire-protection components according to Claim 7, **characterized in that** the nitrogen component added comprises melamine phosphate, guanidine phosphate, ammonium hydrogen phosphate, ammonium polyphosphate, trihydrazinophosphate, or ethylenediamine.

9. Fire-protection components according to any of Claims 4 to 8, **characterized in that** the total amount of intumescent additives is from 20 to 80% by weight.

10. Fire-protection components according to any of Claims 1 to 9, **characterized in that**, if appropriate, an amount of from 0 to 5% by weight of an adhesion promoter from the group of the polyether polyurethane rubbers, polyketone polyurethane block copolymers, maleic-acid-graft olefins, acrylic-acid-graft olefins or methacrylic-acid-graft polyolefins or polystyrene-polybutadiene block copolymers is added to the thermoset for the shell or to the thermoplastic for the insert.

11. Fire-protection components according to any of Claims 1 to 10, **characterized in that**, if appropriate, there is also an intumescent layer surrounding the shell internally and/or externally.

12. Fire-protection components according to any of Claims 1 to 11, **characterized in that** they are produced by multicomponent injection moulding.

## Revendications

1. Eléments de construction résistant au feu, **caractérisés en ce qu'**ils se composent d'une coque en un duromère, le cas échéant renforcé par des fibres de verre, choisi dans le groupe constitué par les résines de mélamine - formaldéhyde, les résines de phénol - formaldéhyde, les résines de polyimide, les polybenzobisthiazoles, les bis-maléinimides, les polybenzimidazoles, les polybenzisooxazoles et les bis-époxy-anthracènes ou en un thermoplastique haute température choisi dans le groupe constitué par la polyéther-sulfone, le polyéther-imide, la polyéther-éthercétone, le sulfure de polyphénylène, l'oxyde de polyphénylène, les polymères de cristaux liquides, les polyarylsulfones, les polyimides thermoplastiques et les polyamides dont la température d'utilisation est supérieure à 200 °C et les températures de fusion et décomposition sont supérieures à 250 °C, et d'un insert relié par emmanchement à force, constitué d'un thermoplastique intumescent.

2. Eléments de construction résistant au feu selon la revendication 1, **caractérisés en ce que** l'on utilise, à titre de thermoplastique, des polyuréthanes thermoplastiques, des amides à blocs de polyéther, des copolymères d'éthylène - propylène - diène, du polyéthylène, du polypropylène, des acétates d'éthylène-vinyle, ou des polyacrylates ou des copolymères d'éthylène dont les températures de transformation se situent en dessous de 250 °C.

3. Eléments de construction résistant au feu selon les revendications 1 à 2, **caractérisés en ce que** la proportion de fibres de verre dans le duromère se situe aux environs de 0 - 50 % en poids.

4. Eléments de construction résistant au feu selon les revendications 1 à 3, **caractérisés en ce que** le thermoplastique est doté d'additifs d'intumescence, dont les températures d'intumescence se situent entre 200 et 300 °C, donc au-dessus de la température de transformation des thermoplastiques pour les inserts, mais en dessous de la température de fusion ou de décomposition des duromères, où l'on utilise, à titre d'additifs d'intumescence, des graphites vermiculaires et/ou une combinaison de donneurs d'acides, d'agents formateurs de carbone et de propulseurs et, le cas échéant, d'un pigment minéral.

5. Eléments de construction résistant au feu selon la revendication 4, **caractérisés en ce que** l'on utilise, à titre de donneur d'acide, des polyphosphates d'ammonium, des phosphates de mélamine, du sulfate de magnésium, des borates ou des aminosulfonates en une quantité de 5 à 40 % en poids ; à titre d'agents formateurs de carbone, des alcools contenant des groupes polyhydroxyles ou de l'amidon en une quantité de 2 à 20 % en poids ; à titre de propulseurs, de la mélamine, du phosphate de mélamine, du dicyandiamide ou de la trishydrazinotriazine en une quantité de 2 à 20 % en poids ; et à titre de pigment, du dioxyde de titane, du dioxyde de silicium, du trioxyde d'aluminium, du dioxyde de zircone ou du dioxyde de zinc en une quantité de 0 à 20 % en poids.

6. Eléments de construction résistant au feu selon la revendication 5, **caractérisés en ce que** l'on utilise un mélange de polyphosphate d'ammonium, de mélamine, de pentaérythrite et de dioxyde de titane.

7. Eléments de construction résistant au feu selon la revendication 6, **caractérisés en ce que** l'on ajoute au thermoplastique un phosphore rouge ou un composé azoté à titre de retardateur de flamme en une quantité de 0 à 40 % en poids.

8. Eléments de construction résistant au feu selon la revendication 7, **caractérisés en ce que** l'on ajoute, à titre de composé azoté, du phosphate de mélamine, du phosphate de guanidine, de l'hydrogénophosphate d'ammonium, du polyphosphate d'ammonium, du trihydrazinophosphate ou de l'éthylènediamine.

9. Eléments de construction résistant au feu selon les revendications 4 à 8, **caractérisés en ce que** la quantité totale d'additifs d'intumescence atteint 20 à 80 % en poids.

10. Eléments de construction résistant au feu selon l'une des revendications 1 à 9, **caractérisés en ce que** l'on ajoute au duromère pour la coque ou au thermoplastique pour l'insert le cas échéant un agent d'adhérence choisi dans le groupe constitué par les caoutchoucs de polyéther-polyuréthane, les copolymères à blocs de polycétone-polyuréthane, les oléfines greffées d'acide maléique, les oléfines greffées d'acide acrylique ou les oléfines greffées d'acide métacrylique ou les polymères à blocs de polystyrène - polybutadiène en une quantité de 0 à 5 % en poids.

11. Eléments de construction résistant au feu selon l'une des revendications 1 à 10, **caractérisés en ce que** la coque est le cas échéant encore entourée, à l'intérieur et/ou à l'extérieur, d'une couche d'intumescence.

12. Eléments de construction résistant au feu selon l'une des revendications 1 à 11, **caractérisés en ce qu'**ils sont fabriqués par un procédé de moulage par injection multicomposants.
